# EUROPEAN PATENT APPLICATION

(11) **EP 3 467 129 A1**
(43) Date of publication of application: **10.04.2019**
(21) Application number: 17806952.2
(22) Date of filing: 26.05.2017
(51) Int. Cl.: C21D 9/50, C21D 10/00, B23K 101/00, B23K 101/18

(54) **WELDING JOINT HAVING EXCELLENT FATIGUE CHARACTERISTICS AND METHOD FOR MANUFACTURING SAME**

(30) Priority: 01.06.2016 KR 20160067841
(71) Applicant: Posco, Pohang-si, Gyeongsangbuk-do 37859 (KR)
(72) Inventor: BAE, Gyu Yeol, Incheon 22002 (KR); SHIN, Hyeon Jeong, Incheon 21558 (KR); KIM, Chung Ha, Seoul 04974 (KR); LEE, Tae-Young, Incheon 21648 (KR)
(74) Representative: Potter Clarkson
(86) International application number: PCT/KR2017/005527
(87) International publication number: WO 2017/209459

(57) **Abstract**

A welding joint having excellent fatigue characteristics and a method for manufacturing the same are disclosed. The welding joint having the excellent fatigue characteristics, according to an embodiment of the present disclosure, may include a welded metal formed by welding between a plurality of steel sheets arranged in such a way to overlap each other at a connecting portion between the plurality of steel sheets, and a remolten portion which is formed at an end of the welded metal and whose surface layer has a Vickers hardness value of 200 Hv or greater.

## Description

### [Technical Field]

The present disclosure relates to a welding joint and a method for manufacturing the same, and more particularly, to a welding joint having excellent fatigue characteristics, subjected to local remelting by irradiating a defocused laser thereon, and a method for manufacturing the welding joint.

### [Background Art]

To meet the fuel efficiency regulatory policy for environmental protection to deal with global warming problem, etc. in the vehicle field, technical studies for weight lightening of vehicle bodies and components are emerging as a great issue. Along with this trend, a high-strength steel for weight lightening also needs to be applied to chassis components playing important roles in improving the driving performance of vehicles. For achieving weight lightening of components, raising the strength of materials is essential, and also, it is important to secure the durability of components made of a high-strength steel in an environment in which fatigue load is repeatedly applied.

In the case of arc-welding that is mainly used to secure strength upon assembly of vehicle chassis components, the components are overlapping-welded by depositing welding wires. Therefore, welding joints have geometric shapes inevitably, which act as repetitive fatigue stress concentrators (the notch effect) becoming breaking points, resulting in deterioration of the durability of the components. Accordingly, the advantage of applying the high-strength steel is lost.

To improve the fatigue characteristics of a welded part, it is important to reduce an angle (also called a toe angle) of an end (also called a toe portion) of a welding joint which is a stress concentrator. Together with this, controlling the material and stress of the toe portion is also an important factor.

Prior document has proposed a method of continuously hitting the ends of welding beads with a chipper (hitting pin) to form plastic-deformed areas, thereby improving fatigue characteristics by providing compression stress. However, in the cases of the proposed method of hitting with the chipper and typical technology of shot ball peening using air pressure, a target material may be deformed after peening. Therefore, applying them to a thin-film steel for vehicle is limited, and also, upon application to local areas such as the ends of welding beads, a defect such as micro-crack may be made in the welding beads having relatively high brittleness.

### (Patent Document 0001) Japanese Laid-Open Patent Application No. 2014-004609 (Laid-open on January 16, 2014)

### [Disclosure]

### [Technical Problem]

The embodiments of the present disclosure are directed to providing a welding joint having excellent fatigue characteristics.

Further, the embodiments of the present disclosure are directed to providing a method for manufacturing a welding joint having excellent fatigue characteristics, subjected to local remelting by irradiating a defocused laser thereon.

### [Technical Solution]

One aspect of the present disclosure provides a welding joint having excellent fatigue characteristics, including: a welded metal 20 formed by welding between a plurality of steel sheets 10 arranged in such a way to overlap each other at a connecting portion between the plurality of steel sheets 10; and a remolten portion 30 which is formed at an end of the welded metal 20 and whose surface layer has a Vickers hardness value of 200 Hv or greater.

Also, according to an embodiment of the present disclosure, the remolten portion 30 may be formed by irradiating a defocused laser 1 on the end of the welded metal 20 to remelt the end of the welded metal 20.

Also, according to an embodiment of the present disclosure, the surface layer of the remolten portion 30 may have a bainite or martensite structure.

Also, according to an embodiment of the present disclosure, a toe angle θ of the remolten portion 30 may be 30° or smaller.

Also, according to an embodiment of the present disclosure, fatigue strength of the welding joint may be 260 MPa or greater.

Also, according to an embodiment of the present disclosure, fatigue strength of the welding joint may be 70% or more of fatigue strength of the steel sheets 10.

Another aspect of the present disclosure provides a method for manufacturing a welding joint, including operation of irradiating a defocused laser 1 on an end of a welded metal 20 formed by welding a connection portion between a plurality of steel sheets 10 arranged in such a way to overlap each other at the connecting portion to remelt the end of the welded metal 20.

Also, according to an embodiment of the present disclosure, an output of the defocused laser 1 may be 6 kW, and movement speed of the defocused laser 1 may be 6 m/min.

Also, according to an embodiment of the present disclosure, a defocus length L of the defocused laser 1 may be 15 to 20 mm.

Also, according to an embodiment of the present disclosure, the defocus of the defocused laser 1 may cover the end of the welded metal 20 and a part of a heat affected zone (HAZ) 11 of the steel sheets 10 adjacent to the end of the welded metal 20.

Also, according to an embodiment of the present disclosure, an irradiation angle of the defocused laser 1 may be 30 to 45°.

### [Advantageous Effects]

In the welding joint having excellent fatigue characteristics according to the embodiments of the present disclosure, by irradiating a defocused laser on an end of a welded metal to increase the radiuses of curvature of the ends of welding beads through local remelting, the concentration of stress may be mitigated to improve fatigue strength of the welding joint.

Also, by irradiating a defocused laser to perform remelting to thereby locally harden the surface layer of the ends of the welding beads, the fatigue strength of the welding joint may be improved.

### [Description of Drawings]

FIG. 1 is a plan view for describing a welding joint having excellent fatigue characteristics, according to an embodiment of the present disclosure.
FIG. 2 is a cross-sectional view of the welding joint shown in FIG. 1, taken along line I-I' of FIG. 1.
FIG. 3 is a cross-sectional view for describing a method for manufacturing a welding joint according to an embodiment of the present disclosure.
FIG. 4 is a picture of a cross section of a welding joint according to an embodiment of the present disclosure, photographed by an optical microscope.
FIG. 5 is a graph showing a hardness distribution of a welding joint according to an embodiment of the present disclosure.
FIG. 6 is a picture of a cross section of a welding joint manufactured by a welding joint manufacturing method according to an embodiment of the present disclosure, photographed by an optical microscope.
FIG. 7 is a picture of a cross section of a welding joint manufactured by a welding joint manufacturing method according to an embodiment of the present disclosure, photographed by an optical microscope.
FIG. 8 is a picture of a cross section of a welding joint manufactured by a welding joint manufacturing method according to a comparative example of the present disclosure, photographed by an optical microscope.
FIG. 9 is a picture of a cross section of a welding joint manufactured by a welding joint manufacturing method according to a comparative example of the present disclosure, photographed by an optical microscope.
FIG. 10 is a picture of a cross section of a welding joint manufactured by a welding joint manufacturing method according to a comparative example of the present disclosure, photographed by an optical microscope.

### [Best Mode]

A welding joint having excellent fatigue characteristics, according to an embodiment of the present disclosure, may include: a welded metal formed by welding between a plurality of steel sheets arranged in such a way to overlap each other at a connecting portion between the plurality of steel sheets; and a remolten portion which is formed at an end of the welded metal 20 and whose surface layer has a Vickers hardness value of 200 Hv or greater.

### [Modes of the Invention]

Hereinafter, embodiments of the present disclosure will be described in detail with reference to the accompanying drawings. The following embodiments are provided to transfer the technical concepts of the present disclosure to one of ordinary skill in the art. However, the present disclosure is not limited to these embodiments, and may be embodied in another form. In the drawings, parts that are irrelevant to the descriptions may be not shown in order to clarify the present disclosure, and also, for easy understanding, the sizes of components are more or less exaggeratedly shown.

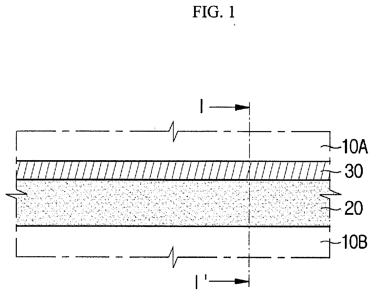

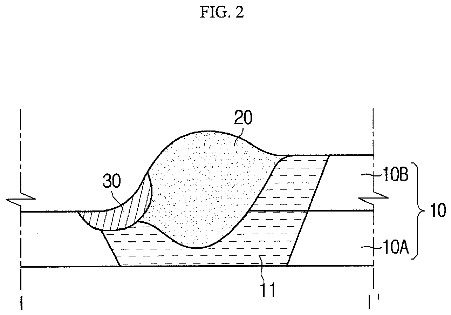

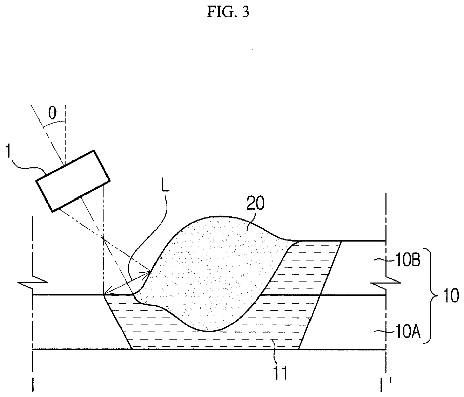

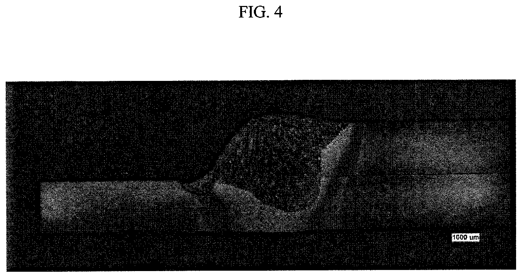

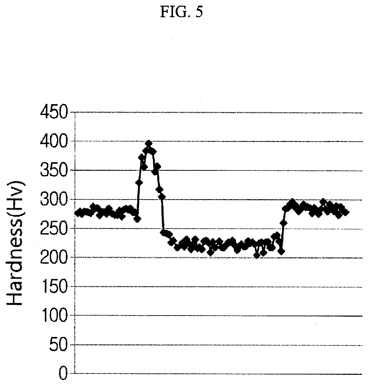

FIG. 1 is a plan view for describing a welding joint having excellent fatigue characteristics, according to an embodiment of the present disclosure. FIG. 2 is a cross-sectional view of the welding joint shown in FIG. 1, taken along line I-I' of FIG. 1. FIG. 3 is a cross-sectional view for describing a method for manufacturing a welding joint according to an embodiment of the present disclosure. FIG. 4 is a picture of a cross section of a welding joint according to an embodiment of the present disclosure, photographed by an optical microscope. FIG. 5 is a graph showing a hardness distribution of a welding joint according to an embodiment of the present disclosure.

Referring to FIGS. 1 to 5, a welding joint according to an embodiment of the present disclosure, and a method for manufacturing the same will be described in detail.

The welding joint having the excellent fatigue characteristics, according to an embodiment of the present disclosure, may include a welded metal 20 formed by welding between a plurality of steel sheets 10 arranged in such a way to overlap each other at a connecting portion between the plurality of steel sheets 10, and a remolten portion 30 which is formed at an end of the welded metal 20 and whose surface layer has a Vickers hardness value of 200 Hv or greater. For example, the end of the welded metal 20 may be an area of the welded metal 20 adjacent to the steel sheets 10.

For example, the steel sheets 10 may be high-strength hot-rolled sheet steels having tensile strength of 780 MPa or higher and a thickness of 6 mmt or smaller. To apply a high-strength steel for weight lightening of a steel, the durability of a product made of such a high-strength steel needs to be secured.

In the case of arc-welding that is used to secure strength upon assembly of vehicle chassis components, the components are overlapping-welded by depositing welding wires. Therefore, welding joints have geometric shapes inevitably, which act as repetitive fatigue stress concentrators becoming breaking points, resulting in deterioration of the durability of the components.

To improve the fatigue characteristics of a welded part, it may be important to reduce an angle (also called a toe angle) of an end (also called a toe portion) of a welding joint which is a stress concentrator. Together with this, controlling the material and stress of the toe portion may be also an important factor.

To reduce the toe angle and to control the material and stress of the toe portion, the remolten portion 30 may be formed at the end of the welded metal 20.

The remolten portion 30 may be formed by irradiating a defocused laser on the end of the welded metal 20 to remelt the end of the welded metal 20.

As such, the end of the welded metal 20, that is, the toe portion may be remolten through heat treatment using a defocused laser, and accordingly, the remolten portion 30 may have a toe angle θ of 30° or smaller.

When the toe angle θ of the remolten portion 30 exceeds 30°, stress may be concentrated on the remolten portion 30, so that the fatigue strength is reduced to 100 MPa or smaller, resulting in a reduction of a fatigue life.

By reducing the toe angle of the remolten portion 30, the radius of curvature of the remolten portion 30 may increase. Accordingly, since the radius of curvature of the remolten portion 30 acting as a repetitive fatigue stress concentrator increases, the concentration of stress onto the remolten portion 30 may be mitigated.

For example, the radius of curvature of the remolten portion 30 may be greater than the radius of curvature of the welded metal 20.

By performing heat treatment of irradiating a defocused laser onto the end of the welded metal 20, a surface layer of the remolten portion 30 may be partially hardened.

When the end of the welded metal 20 is remolten to form the remolten portion 30, softening of a heat affected zone (HAZ) 11 may occur at the steel sheets 10, etc. according to the remelting.

Since the defocused laser can minutely control its irradiating area, remelting may be locally generated, compared with cases in which different kinds of heat sources are used, thereby minimizing softening of a HAZ 11 according to remelting.

As the surface layer of the remolten portion 30 is hardened, a Vickers hardness value of the surface layer may be 200 HV or greater.

Herein, the surface layer of the remolten portion 30 may mean an area within 800 µm from the surface of the remolten portion 30. When the Vickers hardness value of the surface layer of the remolten portion 30 is smaller than 200 HV, the welding joint may be easily fractured due to repetitive fatigue stress.

FIG. 5 is a graph showing a hardness distribution of the welding joint. Referring to FIG. 5, it is confirmed that a hardness value of the surface layer of the remolten portion 30 is equal to or greater than 200 Hv.

The surface layer of the remolten portion 30 subject to the heat treatment may have a bainite or martensite structure. For example, a bainite or martensite structure may appear within 800 µm from the surface of the remolten portion 30.

Accordingly, the fatigue strength of the welding joint may be 260 MPa or greater.

For example, the fatigue strength of the welding joint may be 70% or more of the fatigue strength of the steel sheets 10. That is, by securing the fatigue strength of the welding joint to a level that is maximally similar to that of a steel sheet that is a base material, an application range of a high-strength hot-rolled sheet steel for thinning and weight lightening of components such as vehicle chassis components may be expanded.

The welding joint according to an embodiment of the present disclosure may be manufactured through operation of irradiating a defocused laser on an end of the welded metal 20 formed by welding a connecting portion between the plurality of steel sheets 10 arranged in such a way to overlap each other at the connecting portion to remelt the end of the welded metal 2.

A defocused laser 1 may irradiate a laser on the end of the welded metal 20.

For example, the defocused laser 1 may be a CO₂ solid-state laser.

However, the output of the defocused laser 1 may be limited to this, and for example, the output of the defocused laser 1 may be 6 kW.

For example, head movement speed of the defocused laser 1 may be 4 to 6 m/min.

When the head movement speed of the defocused laser 1 is lower than 4 m/min, the end of the welded metal 20, that is, the surface layer material of the remolten portion 30 may be not easily hardened. When the head movement speed of the defocused laser 1 is higher than 6 m/min, a sufficient melting rate for remelting at the end of the welded metal 20 may be not secured so that a desired toe angle of the remolten portion 30 may be not secured.

For example, a defocus length L of the defocused laser may be 15 to 20 mm.

For example, the defocus of the defocused laser may cover the end of the welded metal 20 and a part of the HAZ 11 of the steel sheets 10 adjacent to the end of the welded metal 20.

When the defocus length L of the defocused laser is shorter than 15 mm, there is a problem that the defocused laser cannot remelt all of the end of the welded metal 20 and the HAZ 11 of the steel sheets 10 formed by welding. When the defocus length L of the defocused laser is longer than 20 mm, there is a problem that a heat input for remelting is insufficient.

For example, an irradiation angle of the defocused laser may be 30 to 45°.

When the irradiation angle of the defocused laser is smaller than 30°, a sufficient melting rate for remelting at the end of the welded metal 20 may be not secured so that a desired toe angle of the remolten portion 30 may be not secured. When the irradiation angle of the defocused laser is greater than 45°, a sufficient melting rate may be not secured at a lower steel sheet 10A of the overlapping joint so that the surface layer material may be not easily hardened.

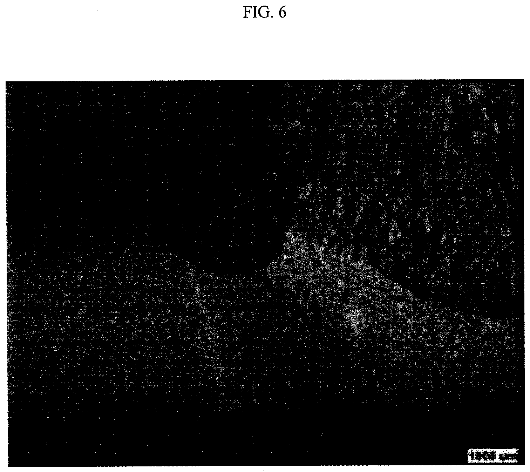

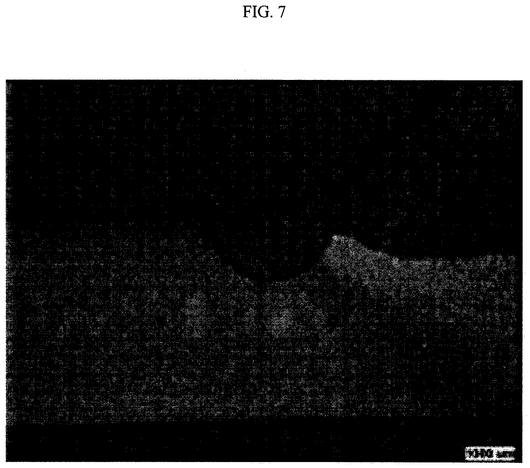

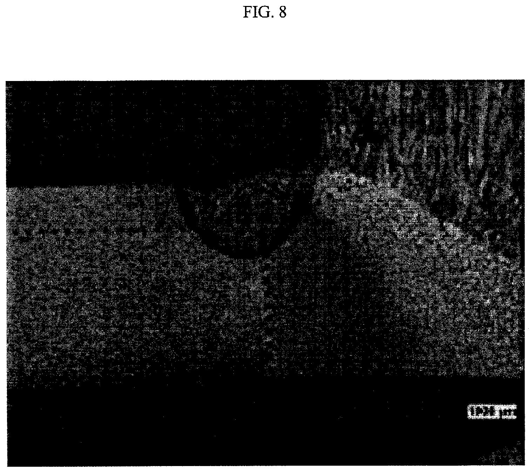

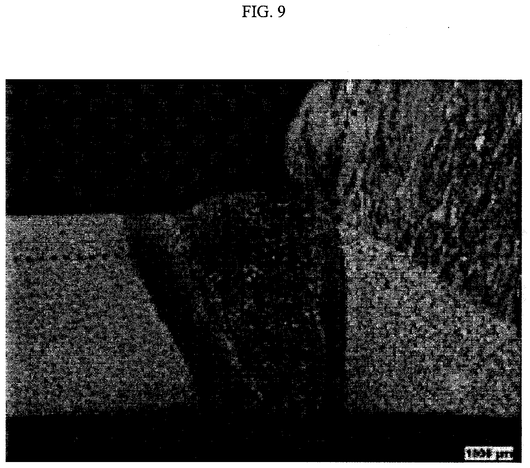

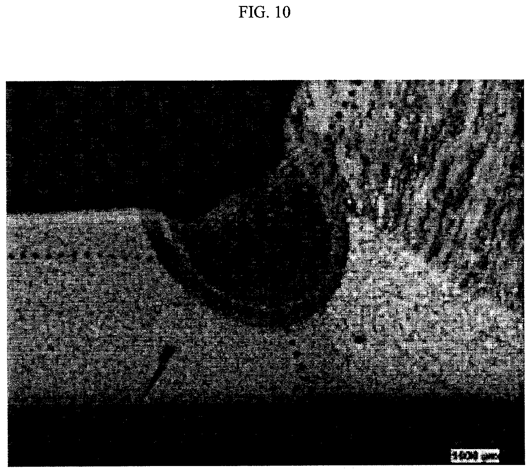

FIG. 6 is a picture of a cross section of a welding joint manufactured by a welding joint manufacturing method according to an embodiment of the present disclosure, photographed by an optical microscope. FIG. 7 is a picture of a cross section of a welding joint manufactured by a welding joint manufacturing method according to an embodiment of the present disclosure, photographed by an optical microscope. FIG. 8 is a picture of a cross section of a welding joint manufactured by a welding joint manufacturing method according to a comparative example of the present disclosure, photographed by an optical microscope. FIG. 9 is a picture of a cross section of a welding joint manufactured by a welding joint manufacturing method according to a comparative example of the present disclosure, photographed by an optical microscope. FIG. 10 is a picture of a cross section of a welding joint manufactured by a welding joint manufacturing method according to a comparative example of the present disclosure, photographed by an optical microscope.

Hereinafter, the present disclosure will be described in more detail with reference to FIGS. 6 to 10 and embodiments.

### Embodiment 1

PO (Pickled & Oiled) 780HB steel sheets are arranged in such a way to overlap each other, and then a connecting portion between the PO (Pickled & Oiled) 780HB steel sheets is arc-welded to form a welded metal. Thereafter, a defocused laser is irradiated onto a toe portion of the welded metal to remelt the toe portion of the welded metal. At this time, an output of the defocused laser is 6kW, laser head movement speed is 4 m/min, a defocus length is 15 mm, and an irradiation angle is 30°. FIG. 6 is a picture of the cross section of a welding joint according to the embodiment 1, photographed by an optical microscope. The manufacturing conditions and fatigue strength of the welding joint according to the embodiment 1 are measured and written on Table 1 below.

### Embodiment 2

A welding joint is manufactured according to the same method as in the embodiment 1. FIG. 7 is a picture of the cross section of a welding joint according to the embodiment 2, photographed by an optical microscope. The manufacturing conditions and fatigue strength of the welding joint according to the embodiment 2 are measured and written on Table 1 below.

### Comparative Example 1

A welding joint is manufactured according to the same method as in the embodiment 1, except that the output of the defocused laser is 6 kw, the laser head movement speed is 4 m/min, the defocus length is 10 mm, and the irradiation angle is 20°. FIG. 8 is a picture of the cross section of the welding joint according to the comparative example 1, photographed by an optical microscope. The manufacturing conditions and fatigue strength of the welding joint according to the comparative example 1 are measured and written on Table 1 below.

### Comparative Example 2

A welding joint is manufactured according to the same method as in the embodiment 1, except that the output of the defocused laser is 6 kw, the laser head movement speed is 2 m/min, the defocus length is 10 mm, and the irradiation angle is 20°. FIG. 9 is a picture of the cross section of the welding joint according to the comparative example 2, photographed by an optical microscope. The manufacturing conditions and fatigue strength of the welding joint according to the comparative example 2 are measured and written on Table 1 below.

### Comparative Example 3

A welding joint is manufactured according to the same method as in the embodiment 1, except that the output of the defocused laser is 6 kw, the laser head movement speed is 2 m/min, the defocus length is 15 mm, and the irradiation angle is 30°. FIG. 10 is a picture of the cross section of the welding joint according to the comparative example 3, photographed by an optical microscope. The manufacturing conditions and fatigue strength of the welding joint according to the comparative example 3 are measured and written on Table 1 below.

### Comparative Example 4

PO (Pickled & Oiled) 780HB steel sheets are arranged to overlap each other, a connecting portion between the PO (Pickled & Oiled) 780HB steel sheets is subject to TIG arc welding to form a welded metal, and then a toe portion of the welded metal is remolten by TIG arc, instead of a defocused laser, thereby completing welding. The manufacturing conditions and fatigue strength of a welding joint according to the comparative example 4 are measured and written on Table 1 below.

**[Table 1]**

| | Laser Output (kW) | Movement Speed (m/min.) | Defocus Length (mm) | Irradiation Angle (°) | Fatigue Strength (MPa) |
|---|---|---|---|---|---|
| Embodiment 1 | 6 | 4 | 15 | 30 | 267 |
| Embodiment 2 | 6 | 4 | 15 | 30 | 273 |
| Comparative Example 1 | 6 | 4 | 10 | 20 | 252 |
| Comparative Example 2 | 6 | 2 | 10 | 20 | Nonmeasurable |
| Comparative Example 3 | 6 | 2 | 15 | 30 | Nonmeasurable |
| Comparative Example 4 | - | - | - | - | 217 |

Table 2 is a table for describing a method for measuring the fatigue strength of the welding joint according to the embodiment 2.

**[Table 2]**

| | Maximum Load (kN) | Maximum Strength (MPa) | Number of Repetitions (cycles) | Fracture or Non-fracture |
|---|---|---|---|---|
| Test 1 | 25.0 | 268 | 2,000,000 | Non-fracture |
| Test 2 | 25.5 | 273 | 2,000,000 | Non-fracture (Fatigue Strength) |
| Test 3 | 26.0 | 277 | 92,586 | Fracture |

Referring to Table 2, the welding joint is not fractured even at the repetition number of 2,000,000 cycles under the maximum load of 25.5kN, and at this time, the maximum strength is 273 MPa. The welding joint is fractured at 92,586 cycles under the maximum load of 26.0 kN increased by 0.5 kN. At this time, the maximum strength is 277 MPa. Accordingly, the fatigue strength of the welding joint according to the embodiment 2 is 273MPa.

Table 3 is a table for describing a method for measuring the fatigue strength of the welding joint according to the comparative example 4.

**[Table 3]**

| | Maximum Load (kN) | Maximum Strength (MPa) | Number of Repetitions (cycles) | Fracture or Non-fracture |
|---|---|---|---|---|
| Test 2-1 | 20.0 | 217 | 2,000,000 | Non-Fracture (Fatigue Strength) |
| Test 2-2 | 20.5 | 219 | 1,227,207 | Fracture |
| Test 2-3 | 21.0 | 224 | 756,193 | Fracture |

Referring to Table 3, the welding joint is not fractured even at the repetition number of 2,000,000 cycles under the maximum load of 20.0 kN, and at this time, the maximum strength is 217 MPa. Accordingly, it is confirmed that the fatigue strength of the welding joint according to the comparative example 4 is 217 MPa.

As described above, since the welding joint according to an embodiment of the present disclosure secures fatigue strength of 260 MPa, an application range of a high-strength hot-rolled sheet steel for thinning and weight lightening of components such as vehicle chassis components may be expanded.

### [Industrial Applicability]

As needs for a high-strength steel and a high-burring steel are steadily increasing, a welding technique including the welding joint having excellent fatigue characteristics according to the embodiments of the present disclosure may be used in various fields such as industrial sites.

## Claims

1. A welding joint having excellent fatigue characteristics, comprising:
a welded metal 20 formed by welding between a plurality of steel sheets 10 arranged in such a way to overlap each other at a connecting portion between the plurality of steel sheets 10; and
a remolten portion 30 which is formed at an end of the welded metal 20 and whose surface layer has a Vickers hardness value of 200 Hv or greater.

2. The welding joint of claim 1, wherein the remolten portion 30 is formed by irradiating a defocused laser 1 on the end of the welded metal 20 to remelt the end of the welded metal 20.

3. The welding joint of claim 1, wherein the surface layer of the remolten portion 30 has a bainite or martensite structure.

4. The welding joint of claim 1, wherein a toe angle θ of the remolten portion 30 is 30° or smaller.

5. The welding joint of claim 1, wherein fatigue strength of the welding joint is 260 MPa or greater.

6. The welding joint of claim 1, wherein fatigue strength of the welding joint is 70% or more of fatigue strength of the steel sheets 10.

7. A method for manufacturing a welding joint, comprising operation of irradiating a defocused laser 1 on an end of a welded metal 20 formed by welding a connection portion between a plurality of steel sheets 10 arranged in such a way to overlap each other at the connecting portion to remelt the end of the welded metal 20.

8. The method of claim 7, wherein an output of the defocused laser 1 is 6 kW, and movement speed of the defocused laser 1 is 4 to 6 m/min.

9. The method of claim 7, wherein a defocus length L of the defocused laser 1 is 15 to 20 mm.

10. The method of claim 9, wherein the defocus of the defocused laser 1 covers the end of the welded metal 20 and a part of a heat affected zone (HAZ) 11 of the steel sheets 10 adjacent to the end of the welded metal 20.

11. The method of claim 7, wherein an irradiation angle of the defocused laser 1 is 30 to 45°.
